# EUROPÄISCHE PATENTSCHRIFT

(11) **EP 2 616 866 B1**
(45) Veröffentlichungstag und Bekanntmachung des Hinweises auf die Patenterteilung: **28.03.2018**
(21) Anmeldenummer: 11733818.6
(22) Anmeldetag: 17.06.2011
(51) Int. Cl.: G02B 21/02, G02B 27/00

(54) **ZOOMSYSTEM HOHER SPREIZUNG**
WIDE RANGE ZOOM SYSTEM
SYSTÈME DE GROSSISSEMENT À FORT ÉTALEMENT

(30) Priorität: 17.09.2010 DE 102010045860
(43) Veröffentlichungstag der Anmeldung: 24.07.2013
(73) Patentinhaber: Carl Zeiss Microscopy GmbH, 07745 Jena (DE)
(72) Erfinder: SPRENGER, Jörg, 37085 Göttingen (DE); WACKE, Michael, 37085 Goettingen (DE)
(74) Vertreter: Patentanwälte Geyer, Fehners & Partner mbB
(86) Internationale Anmeldenummer: PCT/EP2011/060082
(87) Internationale Veröffentlichungsnummer: WO 2012/034723

(56) Entgegenhaltungen:
- EP-A1- 1 544 653
- DE-B4-102004 006 066

## Beschreibung

### Gebiet der Erfindung

Die Erfindung bezieht sich auf ein Zoomsystem hoher Spreizung, insbesondere zur Verwendung in Mikroskopen.

### Stand der Technik

In den letzten zehn Jahren hat es bei der Entwicklung von Mikroskopen und neuerdings auch bei der Entwicklung von Makroskopen zwei Hauptentwicklungsrichtungen gegeben.

Zum einen wurden Fluoreszenzsysteme mit vergleichsweise großen numerischen Aperturen zwischen 0,1 und 0,25 bei Gesamtvergrößerungen von Objektiv und Zoomsystem ≤8 bei freien mechanischen Arbeitsabständen von größer 30 mm vorgestellt, wie beispielhaft beschrieben in DE 103 55 523 A1, EP 1 361 467 A1 oder US 2006/0092504 A1, andererseits wurden Systeme mit Zoomfaktoren von größer 15x entwickelt, wie etwa in DE 10 2006 036 300 A1 dargestellt.

Dem erstgenannten Trend liegt der Wunsch zugrunde, immer größere Objekte fluoreszenzmikroskopisch zu untersuchen und dabei in großen Beobachtungsfeldern ähnliche Fluoreszenzintensitäten zu erreichen wie in der klassischen Fluoreszenzmikroskopie. Während diese im letzten Jahrhundert noch hauptsächlich der Untersuchung von einzelnen Zellen oder Zellverbänden diente, sollen heute immer komplexere Organismen bis hin zu Kleinsäugern untersucht werden. Dies erfordert einerseits hohe numerische Aperturen, andererseits sind, weil die Objekte während der Beobachtung für Mikromanipulatoren, Pipetten und Elektroden zugänglich bleiben müssen, die aus der klassischen Stereo-Mikroskopie bekannten Arbeitsabstände im Zentimeterbereich notwendig.

Der zweitgenannte Trend entspricht der Forderung, schnell zwischen immer größeren Übersichtsfeldern und immer höher vergrößerten Detailansicht zoomen zu können. Diese Anforderung ist nicht auf die Fluoreszenzmikroskopie beschränkt, stellt sich aber auch gerade dort, wenn beispielsweise an einem verhältnismäßig großen Untersuchungsobjekt, z.B. einer Maus, zunächst besonders interessierende Bereiche identifiziert und diese anschließend ohne Wechsel des Objektivs oder gar des Mikroskops hoch vergrößert abgebildet werden soll.

Um Zoomsysteme mit hoher Spreizung noch mit vertretbarem Aufwand realisieren zu können, sind die maximalen objektseitigen Aperturen bzw. die Eintrittspupillendurchmesser in ähnlicher Größenordnung wie bei Zoomsystemen mit geringerem Zoomfaktor auszuführen. Infolge des größeren Zoomfaktors und der damit meist verbundenen höheren Endvergrößerung wird bei diesen Zoomsystemen die gleiche objektseitige Apertur erst in höheren Vergrößerungen bzw. für kleinere Objektfelder erreicht.

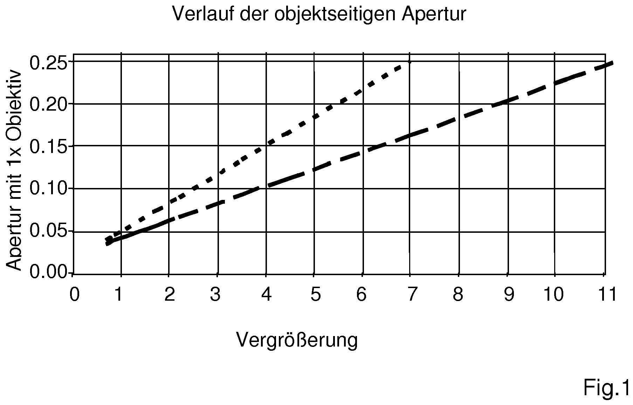

In DE 103 59 733 A1 sind afokale Zoomsysteme mit Zoomfaktoren von größer 8x bis 35x beschrieben. Hier wirkt sich jedoch das oben beschriebene Problem der immer kleiner werdenden bildseitigen Apertur nachteilig aus. Durch den Aufbau des Zoomsystems mit fester Position und Durchmesser der Blende steigt die objektseitige Apertur nahezu linear an, wie in Fig.1 dargestellt, so dass im mittleren Vergrößerungsbereich deutlich weniger aufgelöst werden kann.

In EP 1 361 467 A1 werden afokale Zoomsysteme für ein Mikroskop angegeben, bei denen die Blende zusammen mit einer beweglichen Linsengruppe je nach Zoom verfahren wird. Der hiermit erzielte objektseitige Aperturverlauf ist für Zoomstellungen höherer Vergrößerung zwar günstiger, jedoch ist das Mitführen dieser beweglichen Irisblende in der technischen Umsetzung recht aufwendig. Zudem ist der viergliedrige Aufbau für höhere Zoomfaktoren weniger geeignet.

In JP 2007-309976 AA wird ein "DEVICE FOR VARIABLE MAGNIFICATION AND MICROSCO-PE" angegeben, bei dem eine feststehende Aperturblende vor dem Zoom angeordnet ist, deren Durchmesser durch einfache mechanische Kopplung mit der Bewegung der beweglichen Glieder des Zooms geändert wird. Durch diese unsymmetrische Positionierung der Blende schränkt sich jedoch der Zoombereich des Systems ein. Des Weiteren kann der Anwender diese Blende nicht willkürlich verändern.

Die hier vorgesehene Abhilfe durch eine zweite, manuell zu bedienende Blende in einer versetzten Ebene hat mehrere Nachteile zur Folge: Die Einstellungen sind immer nur für eine Zoomvergrößerung passend; beim Ändern der Zoomvergrößerung wird die zweite Blende nicht mitgeführt; um den gleichen relativen Blendenwert in der neuen Zoomposition wiederherzustellen, muss die Blende manuell nachgeführt werden. Auch wäre hierbei keine sichere Reproduktion des Blendenwertes möglich.

Will der Anwender zum Beispiel in der Zoomstellung, in welcher die erste Blende halb geschlossen ist, die Tiefenschärfe erhöhen, ohne dass er zuvor die zweite Blende schon manuell mitgeführt hat, so muss am vorgesehenen Bedienelement zunächst so lange gedreht werden, bis diese halb geschlossen ist.

Aus DE 10 2004 006066 B4 ist ein Mikroskop bekannt, in welchem ein durch den Benutzer veränderbarer Beobachtungsparameter, zum Beispiel die Vergrößerung, detektiert und mittels einer Steuereinheit in Abhängigkeit von dem detektierten Wert dieses Beobachtungsparameters eine Aperturblende im Beobachtungsstrahlengang auf eine bestimmte Apertur eingestellt wird.

Hierbei dient die Blende jedoch lediglich dazu, den durch das optische System vorgegebene Aperturverlauf zu manipulieren. Die vorgesehenen Zoomsysteme sind Stand der Technik, da kein besonderes optisches System gefordert wird. Die Manipulation kann demzufolge nur darin bestehen, die Apertur mittels der Blende gegenüber der ursprünglichen Apertur des Systems zu verkleinern. Eine Erhöhung der Apertur, um schon in mittleren Zoomvergrößerungen annähernd die maximale Apertur des Systems zu erhalten, ist mit dieser Anordnung nicht möglich.

### Beschreibung der Erfindung

Davon ausgehend liegt der Erfindung die Aufgabe zugrunde, den vorstehend beschriebenen Nachteilen des Standes der Technik abzuhelfen und insbesondere ein Zoomsystem zu schaffen, bei dem die maximale Apertur nicht erst bei der maximalen Zoomvergrößerung, sondern zumindest annähernd schon beim Erreichen der mittleren Zoomvergrößerung erhalten wird.

Diese Aufgabe wird erfindungsgemäß gelöst mit einem Zoomsystem der eingangs genannten Art, umfassend
- fünf Linsengruppen, von denen objektseitig beginnend, die zweite und vierte Linsengruppe relativ zu der ersten, dritten und fünften Linsengruppe in axialer Richtung verschiebbar sind, wobei
- zwischen der zweiten und vierten Linsengruppe eine relativ zur ersten, dritten und fünften Linsengruppe ortsunveränderliche Blende mit variablem Öffnungsdurchmesser vorgesehen ist,
- in mittleren Zoomvergrößerungen die Blende einen maximalen Öffnungsdurchmesser hat, und
- mit der Erhöhung der Vergrößerung die objektseitige Apertur nichtlinear im Verhältnis zur Vergrößerung so ansteigt, dass in Bereichen geringerer Vergrößerungen die objektseitige Apertur stärker zunimmt als in Bereichen höherer Vergrößerungen.

Bevorzugt befindet sich die Blende zwischen der dritten und vierten Linsengruppe. Ein besonderes Merkmal des erfindungsgemäßen Zoomsystems besteht darin, dass bereits bei Erreichen von 60% der maximalen Vergrößerung mindestens 85% der maximal möglichen Apertur eingestellt ist.

Das erfindungsgemäße Zoomsystem mit hoher Spreizung ermöglicht vorteilhaft in der Endvergrößerung einen Eintrittspupillendurchmesser von größer 35 mm. Für die mittleren Vergrößerungen ist das Zoomsystem so ausgelegt, dass hier bereits möglichst hohe Aperturen aufgenommen werden können. Diesbezüglich ist vorgesehen, dass die Brennweitenverteilung im Zoom Linsengruppenbrennweiten mit noch verträglicher Öffnungszahl erlaubt.

Des Weiteren bestimmt die Brennweitenverteilung die Verfahrwege der bewegten Glieder. Beim Einstellen mittlerer Vergrößerungen werden damit gerade die mittleren Linsengruppen stärker belastet. Um einen kontinuierlichen Aperturverlauf über den Zoom zu ermöglichen, hat es sich als vorteilhaft herausgestellt, die Steuerung der Apertur einer variablen Blende zu überlassen und so je nach Zoomstellung und nach optischer Korrektur der Abbildung den Lichtleitwert zu ändern.

Während im Stand der Technik in mittleren Zoomvergrößerungen die maximale Apertur des Systems auch nicht annähernd erreicht werden kann, ist dies mit dem erfindungsgemäßen Zoomsystem möglich, da hier, anders als im Stand der Technik, die Blende weiter geöffnet wird, als in den extremalen Zoomvergrößerungen.

Erfindungsgemäß wird mit einer festen Beziehung von Blendenöffnung und Zoomvergrößerung erreicht, dass eine sich jeweils mit der Zoomvergrößerung ändernde maximale Blendenöffnung nicht überschritten wird, wodurch stets eine optische Korrektur des Bildes gewährleistet ist.

Diese feste Beziehung kann besonders vorteilhaft über eine elektronische Steuerung mittels sogenannter, aus dem Stand der Technik an sich bereits bekannter virtueller Steuerkurven hergestellt werden. Bei der Verwendung von virtuellen Steuerkurven für Zoom- und Blendenverstellung wird jedoch keine Größe detektiert und in Abhängigkeit davon eine zweite Größe nachgeführt, sondern beide Größen werden synchron mittels der Steuereinheit eingestellt.

Der Einsatz virtueller Steuerkurven hat den Vorteil, dass zusätzlich auch verschiedene Transmissionsverläufe, wie zum Beispiel Verläufe mit maximaler Helligkeit, mit konstanter bildseitiger Apertur oder maximaler Schärfentiefe realisiert werden können, zwischen denen der Anwender wählen kann.

Die erfindungsgemäße feste Beziehung zwischen der Bewegung der optischen Glieder und des maximalen Durchmessers der Blende kann aber anstelle einer virtuellen Steuerkurve auch mittels einer mechanischen Steuerkurve realisiert werden. Dies ist bei der in DE 10 2004 006066 B4 offengelegten Blendenvorrichtung nicht möglich, da es dort um die Möglichkeit der Variabilität für den Anwender geht.

### Kurze Beschreibung der Zeichnungen

Die Erfindung wird nachfolgend anhand eines Ausführungsbeispieles näher erläutert. In den zugehörigen Zeichnungen zeigen
- Fig.1: den Verlauf der objektseitigen Apertur bei einem Zoomsystem nach Stand der Technik,

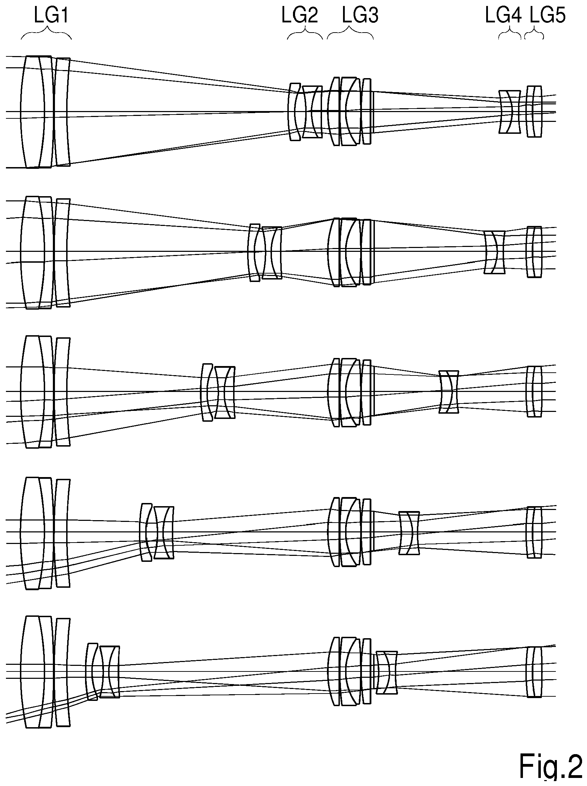

- Fig.2: den prinzipiellen Aufbau des erfindungsgemäßen Zoomsystems in verschiedenen Zoomstellungen,
- Fig.3: den prinzipiellen Verlauf der objektseitigen Apertur bei dem erfindungsgemäßen Zoomsystem,
- Fig.4: den Verlauf der bildseitigen Apertur bei dem erfindungsgemäßen Zoomsystem,
- Fig.5: einen objektseitigen Aperturverlauf bei einer konkreten Ausführung des erfindungsgemäßen Zoomsystems,
- Fig.6: den erfindungsgemäßen Verlauf der Blendenöffnung über den Zoombereich hinweg.

### Ausführliche Beschreibung der Zeichnungen

Das erfindungsgemäße Zoomsystem ist 5-gliedrig afokal ausgeführt, und die Brennweitenverteilung ist so vorgegeben, dass die erste Linsengruppe mit einer langen Brennweiten von f₁'= 148 mm einen großen Eintrittspupillendurchmesser von 40 mm erlaubt. Die zweite Linsengruppe, die als Variator fungiert, ist aus drei Linsen aufgebaut, besitzt eine verhältnismäßig kurze Brennweite von f₂' = 27 mm und ermöglicht so den Zoomfaktor von 20x.

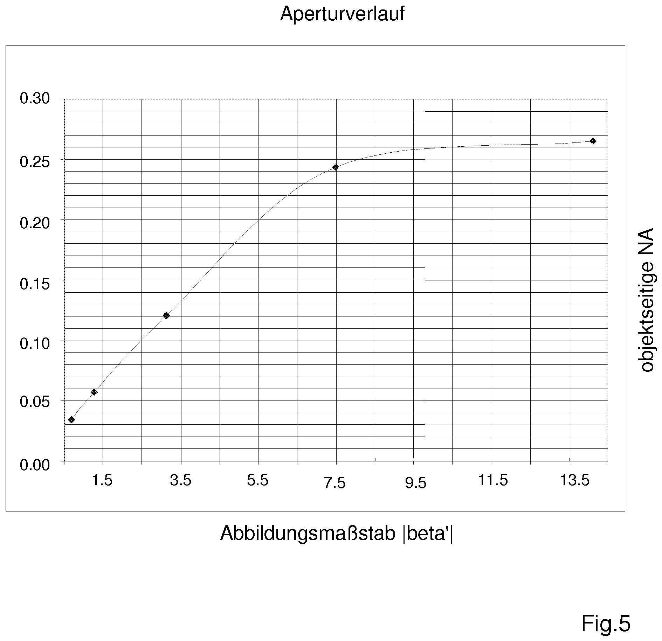

Mit dem Aufbau der dritten Linsengruppe aus vier Linsen und dem Öffnen auf maximalen Blendendurchmesser (siehe Fig.5) wird für die mittleren Vergrößerungen fast die Maximalapertur erreicht. Die Brennweite dieser Linsengruppe beträgt f₃'=40 mm, damit kann diese Linsengruppe die apochromatischen Eigenschaften des Zooms auch in diesem Vergrößerungsbereich erhalten.

Die vierte Linsengruppe mit der Brennweite f₄'=-32 mm und die fünfte Linsengruppe mit der Brennweite f₅'=144 mm sind bezüglich der Brennweitenverteilung der ersten und der zweiten Linsengruppe ähnlich. Sie sind deutlich einfacher aufgebaut, da tubusseitig zum einen ein konstanter Feldwinkel wa = 3.7° vorliegt, und andererseits die bildseitige Apertur beispielsweise bei Verwendung einer Tubuslinse mit der Brennweite f_{T}'=180 mm den Wert von 0.05 nicht überschreiten soll. Die Gründe hierfür wurden oben bereits genannt.

Das erfindungsgemäße Zoomsystem ist beispielsweise mit r den Krümmungsradien der Linsen, D der Dicke der Linsen bzw. den Abständen zwischen den Linsengruppe bei der Vergrößerung GAMMA' von 0.28x, nₑ der Brechzahl und vₑ der Abbezahl des jeweils verwendeten Linsenmaterials nach folgender Tabelle ausgeführt:

| Fläche FL | Krümmungs-radius r | Dicke D | Brechzahl nₑ | Abbezahl vₑ |
|---|---|---|---|---|
| 1 | 91.11357 | 8.500 | 1.49845 | 81.0 |
| 2 | -71.14175 | 3.500 | 1.65803 | 39.5 |
| 3 | -183.02273 | 0.100 | | |
| 4 | 158.22772 | 4.500 | 1.51872 | 64.0 |
| 5 | 153.47275 | 6.6229 | | |
| 6 | 46.10683 | 2.500 | 1.43985 | 94.6 |
| 7 | 22.24624 | 4.100 | | |
| 8 | -30.07461 | 2.000 | 1.65391 | 55.6 |
| 9 | 18.58995 | 3.800 | 1.74341 | 32.0 |
| 10 | 88.60515 | 76.40868 | | |
| 11 | 30.46464 | 4.500 | 1.48794 | 84.1 |
| 12 | -262.91053 | 0.100 | | |
| 13 | 92.93645 | 2.500 | 1.88815 | 40.5 |
| 14 | 20.64110 | 5.200 | 1.53019 | 76.6 |
| 15 | -95.64532 | 0.100 | | |
| 16 | 68.18341 | 3.500 | 1.88815 | 40.5 |
| 17 | 309.33567 | 1.000 | | |
| AB 18 | Unendlich | 2.08654 | | |
| 19 | -32.67878 | 4.000 | 1.74341 | 32.0 |
| 20 | -14.11981 | 2.000 | 1.62033 | 63.1 |
| 21 | 38.55268 | 47.71906 | | |
| 22 | 63.50711 | 2.500 | 1.72539 | 34.5 |
| 23 | 40.87979 | 3.200 | 1.43985 | 94.6 |
| 24 | -178.06438 | | | |

Die Fläche 18 in der Tabelle repräsentiert die Aperturblendenebene. Die zweite und vierte Linsengruppe bewegen sich so, dass in den Vergrößerungen 0.28x, 0.52x, 1.27x, 3.03x und 5.68x für die Luftabstände D5, D10, D18, D21 aus obiger Tabelle folgende Größe (in mm) eingestellt werden.

Ebenfalls ist in der folgenden Tabelle für die Vergrößerungen 0.28x, 0.52x, 1.27x, 3.03x und 5.68x der (maximale) Blenderadius SDIA18 in mm aufgelistet.

| | | | | | |
|---|---|---|---|---|---|
| GAMMA' | 0.28x | 0.52x | 1.27x | 3.03x | 5.68x |
| D5 | 6.623 | 26.308 | 48.817 | 66.224 | 81.032 |
| D10 | 76.409 | 56.723 | 34.215 | 16.808 | 2.000 |
| D18 | 2.087 | 10.153 | 24.792 | 41.500 | 46.926 |
| D21 | 47.719 | 39.653 | 25.013 | 8.305 | 2.880 |
| SDIA18 | 6.125 | 7.147 | 8.922 | 11.138 | 7.262 |

Die Kopplung der Bewegungen der zweiten und vierten Linsengruppe sowie des Blendendurchmessers geschieht bevorzugt durch synchrone Einzelmotorsteuerung von Schrittmotoren über virtuelle Steuerkurven, wie in dem "Verfahren zur Synchronsteuerung mehrerer Schrittmotoren" nach DE 10007201 A1 ausführlich beschrieben.

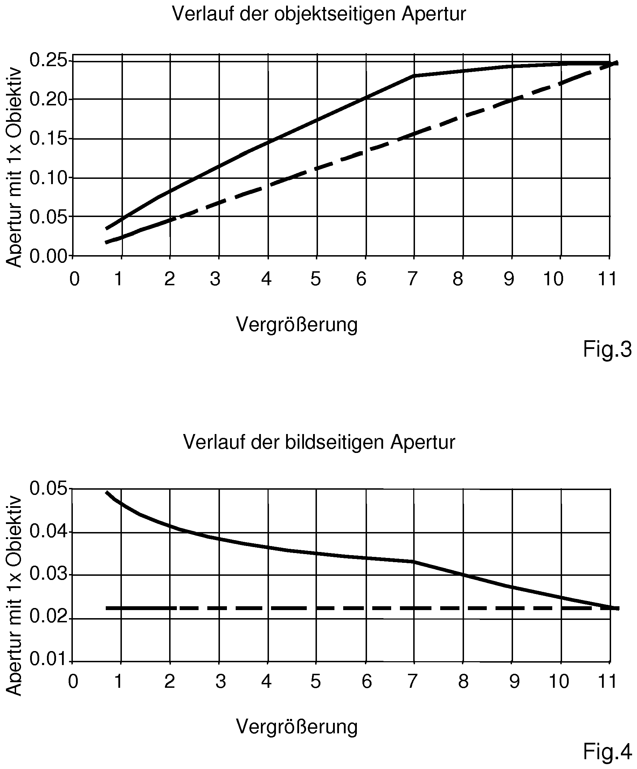

Durch ein Bedienelement, vorzugsweise kombiniert mit einer Statusanzeige, kann der Anwender zwischen mindestens zwei Betriebsmodi, beispielhaft dargestellt in Fig.3, mit unterschiedlichen gespeicherten Steuerkurven für den Blendenmotor wählen: Die durchgezogene Linie zeigt einen Betriebsmodus, bei dem die maximale objektseitige Apertur und damit die maximale Helligkeit erzielt werden. Diese Einstellung ist insbesondere bei Anwendungen mit vergleichsweise geringer Objekthelligkeit von Vorteil, etwa beim Mikroskopieren an schwach reflektierenden Objekten oder in Fluoreszenzanwendungen.

Als weitere Betriebsmodi sind prinzipiell beliebige Verläufe unterhalb der maximalen Apertur möglich. Diese können dann von Vorteil sein, wenn Einbußen bei der Helligkeit hingenommen werden können, aber zum Beispiel eine größere Tiefenschärfe erforderlich ist. Denn maximale objektseitige Apertur bedeutet neben maximaler Helligkeit und bildseitiger Apertur auch maximale Auflösung bei minimaler Tiefenschärfe. Dabei kann die bildseitige Apertur jedoch so groß werden, dass die hohe Auflösung des Zwischenbildes mit dem dieses beobachtenden Detektor, das kann das Auge eines Betrachters sein oder eine Kamera, gar nicht mehr aufgelöst werden kann, andererseits aber die niedrige Tiefenschärfe störend ist.

Fig.3 zeigt den prinzipiellen Verlauf der objektseitigen Apertur bei Zoomsystemen, die der Erfindung entsprechend ausgeführt sind.

Das Auflösungsvermögen beispielsweise einer Digitalkamera ist durch die Pixelgröße bestimmt. Strukturen können nur dann sicher aufgelöst werden, wenn die aufzulösende Struktur auf dem Kamerachip eine Breite von mehr als zwei Pixeln hat; wenn also das Zwischenbild mit einer maximaler Ortsfrequenz fₘₐₓ durch einen Detektor abgetastet wird, der eine Abtastfrequenz f_{Abtast} > 2 * fₘₐₓ hat. (Nyquist-Shannonensches Abtasttheorem mit Nyquist Frequenz = 1/2f_{Abtat}).

Bei einer Pixelgröße von 3 µm wird das beispielsweise nur erreicht, wenn die bildseitige Apertur kleiner als 0,027 ist. Kleinere Strukturen, die mit höherer Apertur auf den Chip projiziert werden, werden über die Pixel verschmiert und lassen sich nicht mehr sicher reproduzieren. Es besteht die Gefahr von Artefakten, so dass Objekte aufgezeichnet werden, die in dieser Form bei einer Erhöhung der Abtastrate nicht nachweisbar wären.

Bei größeren Pixeln sind entsprechend noch kleinere bildseitige Aperturen von Vorteil. Durch Anpassen der Aperturen auf das Auflösungsvermögen des Detektors, also durch Schließen der Blende auf einen Öffnungsdurchmesser, bei denen eine Auflösung erzielt wird, die gerade noch vom Detektor aufgenommen werden kann, findet dann sogar ein Informationsgewinn statt: Die Auflösung des beobachteten Objekts auf dem Detektor bleibt (bei sinkender Auflösung im Zwischenbild) gleich, gleichzeitig nimmt die Schärfentiefe des Bildes aber zu, weshalb bei dreidimensionalen Objekten mehr Information auf den Detektor gelangt.

Ein besonders vorteilhafter, durch einen Betriebsmodus der Blende realisierbarer Zoomverlauf mit künstlich beschränkten Aperturen ist durch die gestrichelte Linie in Fig.3 dargestellt. Sie zeigt einen Betriebsmodus mit linearem Verlauf der objektseitigen Apertur.

In Fig.4 sind beispielhaft die aus den in Fig.3 dargestellten objektseitigen Aperturen folgenden bildseitigen Aperturverläufe dargestellt.

Die durchgehende Linie zeigt wieder den maximalen Verlauf, wie er für intensitätskritische Applikationen, wie Fluoreszenzmikroskopie, von Vorteil ist. Die gestrichelte Linie zeigt einen konstanten Verlauf der bildseitigen Apertur. Nach obigen Ausführungen ist das besonders vorteilhaft, um das Auflösungsvermögen eines Detektors in allen Zoomvergrößerungen gleichermaßen auszunutzen und außerdem die Belichtungszeit des Detektors über den Zoombereich konstant zu halten, weil in allen Zoomvergrößerungen die gleiche Lichtmenge auf den Detektor gelang.

Gleichzeitig wird in jeder Zoomvergrößerung die maximale Schärfentiefe eingestellt, die ohne Auflösungsverlust auf dem Detektor möglich ist. Durch weiteres Zuziehen der Blende lässt sich die Tiefenschärfe noch weiter steigern, allerdings nur noch bei Verlust von Auflösung auf dem Detektor.

In Fig.4 ist die bildseitige Apertur für den konstanten Aperturverlauf (gestrichelte Linie) eingestellt, welche bei dem Verlauf mit maximalen Aperturen (durchgezogene Linie) als Minimum (in der höchsten Vergrößerung) erreicht wird. Konstante Verläufe mit höherer bildseitiger Apertur sind nicht möglich, wohl aber mit niedrigerer. Der Aperturverlauf kann daher nahezu beliebig an größere Pixelgrößen einer CCD-Kamera angepasst werden, lediglich beschränkt durch die angestrebten Belichtungszeiten.

In der Praxis ist dies bei beschränkter Zahl der vorgegeben Betriebsmodi möglich, weil es als weiterer Vorteil einer Blendensteuerung mit virtuellen Steuerkurve die Möglichkeit gibt, dass der Anwender die Blende auf einen bestimmten relativen Öffnungswert zuzieht, und die virtuellen Blendenkurve dann elektronisch derart manipuliert wird, dass dieser relative Wert gegenüber der durch die Steuerkurve vorgegebenen für alle Zoomvergrößerungen eingestellt wird.

Auf diese Weise lassen sich aus einer kleinen Zahl gespeicherter virtueller Steuerkurven Scharen virtueller Steuerkurven erzeugen.

Prinzipiell sind so beliebige, stetige Verlaufe der bildseitigen Apertur unterhalb des durch die durchgehende Linie dargestellten maximalen Verlaufs realisierbar.

Anders als in der bereits genannten JP 2007-309976 AA beschrieben, sind bei der vorgestellten Blendensteuerung mit virtueller Steuerkurve die an die Bewegung der beweglichen Linsengruppen gekoppelte und die durch den Anwender direkt manipulierten Blende physikalisch identisch. Dadurch ist ein Nachführen der manuell eingestellten an eine Änderung der gekoppelten Blende nicht nötig, und alle eingangs beschriebenen Nachteile sind überwunden.

Beliebige Einstellwerte von Zoomvergrößerung und Blendenöffnung können einzeln, zusammen oder in Kombination mit weiteren elektronisch regelbaren Systemparametern, wie Fokus, Beleuchtungshelligkeit, Kamerabelichtungszeit, Fluoreszenzfiltersatz etc. mit Hilfe geeigneter Bedienelemente, zum Beispiel Bedienkonsole des Mikroskops mit oder ohne Touchscreen oder PC, gespeichert und wiederhergestellt werden. Dies ist insbesondere von Vorteil, wenn verschiedene Anwendungen abwechselnd an einem Gerät ausgeführt werden oder verschiedene Anwender sich bei der Arbeit an einem Gerät abwechseln.

Zur sicheren Reproduktion des Bewegungsverlaufs der Blendenöffnung ist die Initialisierung der Blendenöffnung bei Systemstart erforderlich oder der Einsatz eines Meßsystems, welches kontinuierlich die Blendenöffnung verfolgen kann.

Fig.5 zeigt einen konkreten objektseitigen Aperturverlauf, dass sich bei Ausführung des erfindungsgemäßen Zoomsystems mit einem Objektiv mit der Brennweite f'=72.75 mm und einer Tubuslinse f'=180 mm in Abhängigkeit des damit verbundenen Abbildungsmaßstabes beta' ergibt. Dabei sind in Fig.5 objektseitige Aperturen Abbildungsmaßstäben zugeordnet wie in folgender Tabelle angegeben:

| | | | | | |
|---|---|---|---|---|---|
| \|beta'\| NA objektseitig | 0.700 | 1.274 | 3.133 | 7.5 | 14.000 |
| | 0.034 | 0.057 | 0.120 | 0.243 | 0.265 |

Wie der Grafik zu nehmen ist, wird bereits ab einer Vergrößerung von beta'=-7.5x über 90% der maximalen objektseitigen Apertur aufgenommen. Diese große numerische Apertur bewirkt, dass somit schon bei 53% der Endvergrößerung infolge der konstanten Zwischenbildgröße ein fast doppelt so großes Objektfeld mit hoher Auflösung abgebildet wird.

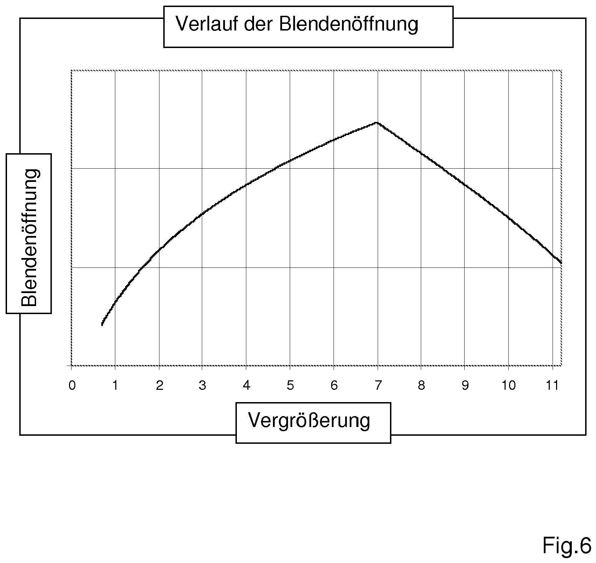

Während Fig.3 den prinzipiellen Verlauf der objektseitigen Apertur bei Zoomsystemen zeigt, die der Erfindung entsprechend ausgeführt sind, zeigt Fig.6 den mit dem oben beschriebenen Ausführungsbeispiel erzielten Verlauf der Blendenöffnung über den Zoombereich hinweg. Es ist ersichtlich, dass mit der Erhöhung der Vergrößerung die objektseitige Apertur nichtlinear im Verhältnis zur Vergrößerung ansteigt, so dass im Bereich geringer Vergrößerungen die objektseitige Apertur stärker zunimmt als im Bereich höherer Vergrößerungen. Von einer kleinen Ausgangsöffnung in der kleinsten Zoomvergrößerung nimmt der Öffnungsdurchmesser der Blende zu, bis annähernd die maximaler objektseitige Apertur erreicht wird. Anschließend fällt der Blendendurchmesser wieder steil ab, während die objektseitige Apertur über den übrigen Zoombereich nur noch leicht ansteigt.

## Patentansprüche

1. Zoomsystem hoher Spreizung, insbesondere zur Verwendung in Mikroskopen, **gekennzeichnet durch**
- einen Eintrittspupillendurchmesser von mehr als 35 mm in der Endvergrößerung,
- fünf Linsengruppen, von denen objektseitig beginnend, die zweite und vierte Linsengruppe relativ zu der ersten, dritten und fünften Linsengruppe in axialer Richtung verschiebbar sind, wobei
- zwischen der zweiten und vierten Linsengruppe eine relativ zur ersten, dritten und fünften Linsengruppe ortsunveränderliche Blende mit variablem Öffnungsdurchmesser vorgesehen ist, wobei der Blendendurchmesser über eine virtuelle Steuerkurve in einer festen Beziehung zur Zoomvergrösserung steht
- der Öffnungsdurchmesser mit einer Erhöhung der Zoomvergrößerung von einer kleinster Zoomvergrößerung bis zu einer mittleren Zoomvergrößerung monoton ansteigend ausgebildet ist,
- in der mittleren Zoomvergrößerung die Blende einen maximalen Öffnungsdurchmesser hat, und
- der Öffnungsdurchmesser bei einer weiteren Erhöhung der Zoomvergrößerung monoton abfallend ausgebildet ist, wobei die Apertur durch die variable Blende gesteuert wird, so dass
- mit der Erhöhung der Vergrößerung die objektseitige Apertur nichtlinear im Verhältnis zur Vergrößerung so ansteigt, dass in Bereichen geringerer Vergrößerungen die objektseitige Apertur stärker zunimmt als in Bereichen höherer Vergrößerungen.

2. Zoomsystem nach Anspruch 1, bei dem sich die Blende zwischen der dritten und vierten Linsengruppe befindet.

3. Zoomsystem nach Anspruch 1 oder 2, bei dem mit der Zoomverstellung bei 60% der maximalen Vergrößerung bereits mindestens 85% der maximal möglichen Apertur eingestellt ist.

4. Zoomsystem nach einem der vorgenannten Ansprüche, bei dem die erste Linsengruppe aus drei Linsen besteht und eine Brennweite von f₁ = 148 mm hat, die zweite Linsengruppe aus drei Linsen besteht und eine Brennweite von f₂ = -27 mm hat, die dritte Linsengruppe aus vier Linsen besteht und eine Brennweite von f₃ = 40 mm hat, die vierte Linsengruppe aus zwei Linsen besteht und eine Brennweite von f₄ = -32 mm hat, und die fünfte Linsengruppe aus zwei Linsen besteht und eine Brennweite von f₅ = 144 mm hat.

5. Zoomsystem nach einem der vorgenannten Ansprüche, bei dem bildseitig ein konstanter Feldwinkel wa = 3.7° vorliegt.

6. Zoomsystem nach einem der vorgenannten Ansprüche, bei dem bei bildseitiger Verwendung einer Tubuslinse mit der Brennweite f_{T} = 180 mm die bildseitige Apertur den Wert 0.05 nicht überschreitet.

7. Zoomsystem nach einem der vorgenannten Ansprüche, mit r den Krümmungsradien der Linsen, D der Dicke der Linsen bzw. den Abständen zwischen den Linsengruppe bei der Vergrößerung von 0.28x, nₑ der Brechzahl und vₑ des Abbezahl des jeweils verwendeten Linsenmaterials nach folgender Tabelle:
| Fläche FL | Krümmungs-radius r | Dicke D | Brechzahl nₑ | Abbezahl vₑ |
|---|---|---|---|---|
| 1 | 91.11357 | 8.500 | 1.49845 | 81.0 |
| 2 | -71.14175 | 3.500 | 1.65803 | 39.5 |
| 3 | -183.02273 | 0.100 | | |
| 4 | 158.22772 | 4.500 | 1.51872 | 64.0 |
| 5 | 153.47275 | 6.6229 | | |
| 6 | 46.10683 | 2.500 | 1.43985 | 94.6 |
| 7 | 22.24624 | 4.100 | | |
| 8 | -30.07461 | 2.000 | 1.65391 | 55.6 |
| 9 | 18.58995 | 3.800 | 1.74341 | 32.0 |
| 10 | 88.60515 | 76.40868 | | |
| 11 | 30.46464 | 4.500 | 1.48794 | 84.1 |
| 12 | -262.91053 | 0.100 | | |
| 13 | 92.93645 | 2.500 | 1.88815 | 40.5 |
| 14 | 20.64110 | 5.200 | 1.53019 | 76.6 |
| 15 | -95.64532 | 0.100 | | |
| 16 | 68.18341 | 3.500 | 1.88815 | 40.5 |
| 17 | 309.33567 | 1.000 | | |
| AB 18 | Unendlich | 2.08654 | | |
| 19 | -32.67878 | 4.000 | 1.74341 | 32.0 |
| 20 | -14.11981 | 2.000 | 1.62033 | 63.1 |
| 21 | 38.55268 | 47.71906 | | |
| 22 | 63.50711 | 2.500 | 1.72539 | 34.5 |
| 23 | 40.87979 | 3.200 | 1.43985 | 94.6 |
| 24 | -178.06438 | | | |

8. Zoomsystem nach Anspruch 7 mit den variablen Luftabständen D5, D10, D18, D21 und dem Blendenradius SDIA18 bei den Vergrößerungen 0.28x, 0.52x, 1.27x, 3.03x und 5.68x nach folgender Tabelle:
| | | | | | |
|---|---|---|---|---|---|
| GAMMA' | 0.28x | 0.52x | 1.27x | 3.03x | 5.68x |
| D5 | 6.623 | 26.308 | 48.817 | 66.224 | 81.032 |
| D10 | 76.409 | 56.723 | 34.215 | 16.808 | 2.000 |
| D18 | 2.087 | 10.153 | 24.792 | 41.500 | 46.926 |
| D21 | 47.719 | 39.653 | 25.013 | 8.305 | 2.880 |
| SDIA18 | 6.125 | 7.147 | 8.922 | 11.138 | 7.262 |

9. Zoomsystem nach einem der vorgenannten Ansprüche, bei dem die Kopplung der Bewegungen der zweiten und vierten Linsengruppe sowie des Blendendurchmessers durch synchrone Einzelsteuerung von Schrittmotoren über virtuelle Steuerkurven vorgesehen ist.

## Claims

1. Wide-range zoom system, in particular for use in microscopes,
**characterized by**
- an entrance pupil diameter greater than 35 mm at the final magnification,
- five lens groups, of which, starting on the object side, the second and fourth lens groups are displaceable in the axial direction relative to the first, third and fifth lens groups, wherein
- a diaphragm with a variable aperture diameter which is stationary relative to the first, third and fifth lens groups is provided between the second and fourth lens groups, wherein the relationship between the diaphragm diameter and the zoom magnification is fixed via a virtual control cam,
- the aperture diameter is formed increasing monotonically as the zoom magnification is increased from a lowest zoom magnification to a medium zoom magnification,
- the diaphragm has a maximum aperture diameter at the medium zoom magnification, and
- the aperture diameter is formed decreasing monotonically as the zoom magnification is further increased, wherein the aperture is controlled by the variable diaphragm, with the result that,
- as the magnification is increased, the object-side aperture increases nonlinearly relative to the magnification such that the object-side aperture increases at a higher rate in lower magnification ranges than in higher magnification ranges.

2. Zoom system according to claim 1, in which the diaphragm is located between the third and fourth lens groups.

3. Zoom system according to claim 1 or 2, in which, when the zoom is adjusted to 60% of the maximum magnification, at least 85% of the maximum possible aperture is already set.

4. Zoom system according to one of the preceding claims, in which the first lens group consists of three lenses and has a focal length of f₁ = 148 mm, the second lens group consists of three lenses and has a focal length of f₂ = -27 mm, the third lens group consists of four lenses and has a focal length of f₃ = 40 mm, the fourth lens group consists of two lenses and has a focal length of f₄ = -32 mm, and the fifth lens group consists of two lenses and has a focal length of f₅ = 144 mm.

5. Zoom system according to one of the preceding claims, in which there is a constant field angle wa = 3.7° on the image side.

6. Zoom system according to one of the preceding claims, in which, if a tube lens having a focal length of f_{T} = 180 mm is used on the image side, the image-side aperture does not exceed the value 0.05.

7. Zoom system according to one of the preceding claims, in which r is the radii of curvature of the lenses, D is the thickness of the lenses or the distances between the lens groups at the magnification of 0.28x, nₑ is the refractive index and vₑ is the Abbe number of the lens material used in each case, according to the following table:
| Surface FL | Radius of curvature r | Thickness D | Refractive index nₑ | Abbe number vₑ |
|---|---|---|---|---|
| 1 | 91.11357 | 8.500 | 1.49845 | 81.0 |
| 2 | -71.14175 | 3.500 | 1.65803 | 39.5 |
| 3 | -183.02273 | 0.100 | | |
| 4 | 158.22772 | 4.500 | 1.51872 | 64.0 |
| 5 | 153.47275 | 6.6229 | | |
| 6 | 46.10683 | 2.500 | 1.43985 | 94.6 |
| 7 | 22.24624 | 4.100 | | |
| 8 | -30.07461 | 2.000 | 1.65391 | 55.6 |
| 9 | 18.58995 | 3.800 | 1.74341 | 32.0 |
| 10 | 88.60515 | 76.40868 | | |
| 11 | 30.46464 | 4.500 | 1.48794 | 84.1 |
| 12 | -262.91053 | 0.100 | | |
| 13 | 92.93645 | 2.500 | 1.88815 | 40.5 |
| 14 | 20.64110 | 5.200 | 1.53019 | 76.6 |
| 15 | -95.64532 | 0.100 | | |
| 16 | 68.18341 | 3.500 | 1.88815 | 40.5 |
| 17 | 309.33567 | 1.000 | | |
| AB 18 | infinite | 2.08654 | | |
| 19 | -32.67878 | 4.000 | 1.74341 | 32.0 |
| 20 | -14.11981 | 2.000 | 1.62033 | 63.1 |
| 21 | 38.55268 | 47.71906 | | |
| 22 | 63.50711 | 2.500 | 1.72539 | 34.5 |
| 23 | 40.87979 | 3.200 | 1.43985 | 94.6 |
| 24 | -178.06438 | | | |

8. Zoom system according to claim 7 in which the variable air gaps D5, D10, D18, D21 and the diaphragm radius SDIA18 at the magnifications 0.28x, 0.52x, 1.27x, 3.03x and 5.68x are according to the following table:
| | | | | | |
|---|---|---|---|---|---|
| GAMMA' | 0.28x | 0.52x | 1.27x | 3.03x | 5.68x |
| D 5 | 6.623 | 26.308 | 48.817 | 66.224 | 81.032 |
| D10 | 76.409 | 56.723 | 34.215 | 16.808 | 2.000 |
| D18 | 2.087 | 10.153 | 24.792 | 41.500 | 46.926 |
| D21 | 47.719 | 39.653 | 25.013 | 8.305 | 2.880 |
| SDIA18 | 6.125 | 7.147 | 8.922 | 11.138 | 7.262 |

9. Zoom system according to one of the preceding claims, in which the coupling of the movements of the second and fourth lens groups and the diaphragm diameter is provided by synchronous individual control of stepper motors via virtual control cams.

## Revendications

1. Système de grossissement à fort étalement, notamment pour une utilisation dans les microscopes,
**caractérisé par**
- un diamètre de pupille d'entrée de plus de 35 mm au grossissement final,
- cinq groupes de lentilles, dont les deuxième et quatrième groupes de lentilles, en commençant par le côté objet, sont déplaçables dans le sens axial par rapport aux premier, troisième et cinquième groupes de lentilles, dans lequel
- un diaphragme à diamètre d'ouverture variable en position fixe par rapport aux premier, troisième et cinquième groupes de lentilles est fourni entre les deuxième et quatrième groupes de lentilles, dans lequel la relation entre le diamètre de diaphragme et le grossissement de zoom est fixe par l'intermédiaire d'une came de commande virtuelle,
- le diamètre d'ouverture est formé d'une manière croissant de façon monotone au fur et à mesure que le grossissement de zoom est augmenté du grossissement de zoom le plus bas à un grossissement de zoom moyen,
- le diaphragme a un diamètre d'ouverture maximum au grossissement de zoom moyen, et
- le diamètre d'ouverture est formé d'une manière décroissant de façon monotone lors d'une augmentation supplémentaire du grossissement de zoom, dans lequel l'ouverture est commandée par le diaphragme variable, ayant pour résultat que,
- au fur et à mesure que le grossissement est augmenté, l'ouverture côté objet augmente de manière non linéaire par rapport au grossissement de telle sorte que l'ouverture côté objet augmente plus rapidement dans les plages de grossissement inférieures que dans les plages de grossissement supérieures.

2. Système de grossissement selon la revendication 1, dans lequel le diaphragme est situé entre les troisième et quatrième groupes de lentilles.

3. Système de grossissement selon la revendication 1 ou 2, dans lequel, quand le zoom est ajusté à 60% du grossissement maximum, l'ouverture maximum possible est déjà réglée à au moins 85%.

4. Système de grossissement selon l'une quelconque des revendications précédentes, dans lequel le premier groupe de lentilles consiste en trois lentilles et a une longueur focale de f₁ = 148 mm, le deuxième groupe de lentilles consiste en trois lentilles et a une longueur focale de f₂ = -27 mm, le troisième groupe de lentilles consiste en quatre lentilles et a une longueur focale de f₃ = 40 mm, le quatrième groupe de lentilles consiste en deux lentilles et a une longueur focale de f₄ = -32 mm, et le cinquième groupe de lentilles consiste en deux lentilles et a une longueur focale de f₅ = 144 mm.

5. Système de grossissement selon l'une quelconque des revendications précédentes, dans lequel le côté image présente un angle de champ constant wa = 3,7°.

6. Système de grossissement selon l'une quelconque des revendications précédentes, dans lequel, si une lentille tube d'une longueur focale de f_{T} = 180 mm est utilisée sur le côté image, l'ouverture côté image ne dépasse pas la valeur 0,05.

7. Système de grossissement selon l'une quelconque des revendications précédentes, dans lequel r est le rayon de courbure des lentilles, D est l'épaisseur des lentilles ou les distances entre les groupes de lentilles au grossissement de 0,28x, nₑ est l'indice de réfraction et vₑ est le nombre d'Abbe du matériau de lentille utilisé dans chaque cas, conformément au tableau suivant :
| Surface FL | Rayon de courbure r | Epaisseur D | Indice de réfraction nₑ | Nombre d'Abbe νₑ |
|---|---|---|---|---|
| 1 | 91,11357 | 8,500 | 1,49845 | 81,0 |
| 2 | -71,14175 | 3,500 | 1,65803 | 39,5 |
| 3 | -183,02273 | 0,100 | | |
| 4 | 158,22772 | 4,500 | 1,51872 | 64,0 |
| 5 | 153,47275 | 6,6229 | | |
| 6 | 46,10683 | 2,500 | 1,43985 | 94,6 |
| 7 | 22,24624 | 4,100 | | |
| 8 | -30,07461 | 2,000 | 1,65391 | 55,6 |
| 9 | 18,58995 | 3,800 | 1,74341 | 32,0 |
| 10 | 88,60515 | 76,40868 | | |
| 11 | 30,46464 | 4,500 | 1,48794 | 84,1 |
| 12 | -262,91053 | 0,100 | | |
| 13 | 92,93645 | 2,500 | 1,88815 | 40,5 |
| 14 | 20,64110 | 5,200 | 1,53019 | 76,6 |
| 15 | -95,64532 | 0,100 | | |
| 16 | 68,18341 | 3,500 | 1,88815 | 40,5 |
| 17 | 309,33567 | 1,000 | | |
| AB 18 | infini | 2,08654 | | |
| 19 | -32,67878 | 4,000 | 1,74341 | 32,0 |
| 20 | -14,11981 | 2,000 | 1,62033 | 63,1 |
| 21 | 38,55268 | 47,71906 | | |
| 22 | 63,50711 | 2,500 | 1,72539 | 34,5 |
| 23 | 40,87979 | 3,200 | 1,43985 | 94,6 |
| 24 | -178,06438 | | | |

8. Système de grossissement selon la revendication 7 dans lequel les espaces d'air variables D5, D10, D18, D21 et le rayon de diaphragme SDIA18 aux grossissements 0,28x, 0,52x, 1,27x, 3,03x et 5,68x sont conformément au tableau suivant :
| GAMMA' | 0,28x | 0,52x | 1,27x | 3,03x | 5,68x |
|---|---|---|---|---|---|
| D5 | 6,623 | 26,308 | 48,817 | 66,224 | 81,032 |
| D10 | 76,409 | 56,723 | 34,215 | 16,808 | 2,000 |
| D18 | 2,087 | 10,153 | 24,792 | 41,500 | 46,926 |
| D21 | 47,719 | 39,653 | 25,013 | 8,305 | 2,880 |
| SDIA18 | 6,125 | 7,147 | 8,922 | 11,138 | 7,262 |

9. Système de grossissement selon l'une quelconque des revendications précédentes, dans lequel l'accouplement des mouvements des deuxième et quatrième groupes de lentilles et du diamètre de diaphragme est assuré par une commande individuelle synchrone de moteurs pas à pas par l'intermédiaire de cames de commande virtuelle.
